# FASCICULE DE BREVET EUROPEEN

(11) **EP 1 361 536 B1**
(45) Date de publication et mention de la délivrance du brevet: **18.06.2008**
(21) Numéro de dépôt: 03291036.6
(22) Date de dépôt: 29.04.2003
(51) Int. Cl.: G06K 9/32, G01S 3/784

(54) **Procédé pour extraire une zone illuminée d'une matrice de photocapteurs d'un dispositif de détection lumineuse**
Verfahren zur Extrahieren einer beleuchteten Zone einer Photodetekor-Matrix einer Lichterkennungsvorrichtung
Method for extracting an illuminated zone of a matrix of photodetectors of a light detection device

(30) Priorité: 06.05.2002 FR 0205623
(43) Date de publication de la demande: 12.11.2003
(73) Titulaire: MBDA France, 75116 Paris (FR)
(72) Inventeur: Boubal, Michel, 18000 Bourges (FR); Michelis, Jean, 83260 La Crau (FR); Dumas, Michel, 30000 Nimes (FR)
(74) Mandataire: Hauer, Bernard

(56) Documents cités:
- EP-A- 0 633 457
- US-A- 6 003 810
- US-B1- 6 298 143

## Description

La présente invention concerne un procédé pour extraire une zone illuminée d'une matrice de photocapteurs d'un dispositif de détection lumineuse, ainsi qu'un dispositif de détection lumineuse susceptible de mettre en oeuvre ce procédé.

Un tel dispositif de détection lumineuse qui comporte de façon usuelle, et comme décrit par exemple dans les documents EP-0 633 457 et US-A-6 003 810, une matrice de photocapteurs qui sont agencés en lignes et en colonnes et qui sont susceptibles de prendre chacun l'un de deux états, un état actif lorsqu'ils sont illuminés et un état inactif lorsqu'ils ne sont pas illuminés, est destiné plus particulièrement, bien que non exclusivement, à la détection d'une impulsion laser de durée très courte qui est émise dans un environnement lumineux ambiant d'éclairement variable, par exemple à une fréquence prédéterminée.

Un autre dispositif et un autre procédé de détection lumineuse sont décrits dans le brevet US-B-6 298 143.

A titre d'illustration, l'impulsion laser à détecter peut être émise par une source laser qui est pointée sur une cible, par exemple un char, pour la désigner, afin qu'elle puisse être localisée par un système d'arme, tel qu'un missile, qui est équipé dudit dispositif de détection lumineuse et qui est destiné à détruire cette cible. A cet effet, ledit dispositif de détection lumineuse est par exemple associé à l'autodirecteur du missile, est agencé à poste fixe sur ledit missile et observe l'espace vers l'avant dudit missile. Les informations relatives à la localisation de la cible, qui sont engendrées par ce dispositif de détection lumineuse, sont fournies à l'autodirecteur qui les utilise pour guider le missile sur la cible.

Un inconvénient important concernant l'utilisation d'un tel dispositif de détection lumineuse dans le guidage d'un missile, réside dans la difficulté et dans la durée importante nécessaire pour extraire de ladite matrice de photocapteurs, la zone qui est illuminée par l'impulsion laser, et pour localiser cette zone sur la matrice, de manière à obtenir des informations sur la position de la cible qui sont nécessaires pour le guidage du missile. En raison de la vitesse élevée du missile, il est impératif de connaître rapidement tous les changements de position pour pouvoir fournir à temps des ordres de correction aux organes de pilotage dudit missile, afin qu'il ne perde pas la cible.

Or, pour connaître la position d'une tache lumineuse, c'est-à-dire la position de la zone illuminée précitée, sur la matrice de photocapteurs, il est connu d'analyser individuellement l'état (actif ou inactif) de chaque photocapteur. Une telle analyse, si elle est mise en oeuvre photocapteur par photocapteur, est très longue, et en tout cas trop longue pour les applications envisagées précédemment, pour lesquelles les informations doivent être disponibles très rapidement.

Par ailleurs, il est également connu de mettre en oeuvre une porte logique OU du type "OU global" sur toute la matrice, qui permet d'indiquer si au moins un photocapteur est à l'état actif sur ladite matrice par une analyse simultanée de tous les photocapteurs. Mais un tel "OU global" ne permet pas d'identifier le ou les photocapteurs qui sont activés, et donc de les localiser. Un tel "OU global" ne permet donc pas d'extraire rapidement une zone illuminée d'une matrice de photocapteurs.

La présente invention a pour objet de remédier à ces inconvénients. Elle concerne un procédé pour extraire, de façon très rapide et fiable, une zone illuminée d'une matrice de photocapteurs d'un dispositif de détection lumineuse.

A cet effet, selon l'invention, ledit procédé pour extraire une zone illuminée d'une matrice de photocapteurs d'un dispositif de détection lumineuse, ladite matrice comportant une pluralité de photocapteurs qui sont agencés en lignes et en colonnes et qui sont susceptibles de prendre chacun l'un de deux états, un état actif lorsqu'ils sont illuminés et donc activés et un état passif lorsqu'ils ne sont pas illuminés et donc inactivés, ladite zone illuminée correspondant à l'ensemble des photocapteurs activés, est remarquable en ce que l'on répète les étapes successives a) à c) suivantes :
a) on divise un domaine matriciel de ladite matrice de ce dispositif de détection lumineuse, en une pluralité de zones de recherche couvrant ensemble ledit domaine matriciel, ledit domaine matriciel correspondant à toute ladite matrice lors de la première division ;
b) on analyse lesdites zones de recherche les unes après les autres pour rechercher la présence d'un photocapteur actif, l'analyse d'une zone de recherche consistant à l'aide d'une porte logique OU reliée à tous les photocapteurs de la zone de recherche à recueillir les uns après les autres les états de l'ensemble de ces photocapteurs de ladite zone de recherche et à vérifier globalement si l'un desdits états est un état actif ; et
c) dès qu'un photocapteur actif est trouvé sur une zone de recherche particulière, on arrête la recherche et on considère cette zone de recherche, dont on connaît la taille et la position sur ladite matrice, comme nouveau domaine matriciel que l'on réutilise si nécessaire dans une nouvelle étape a),
ladite répétition des étapes a) à c) étant poursuivie jusqu'à ce que l'on obtienne un domaine matriciel comprenant uniquement des photocapteurs actifs, ce domaine matriciel dont on connaît la taille et la position sur la matrice correspondant alors à ladite zone illuminée à extraire.

Grâce à l'analyse conforme à l'invention de la matrice de photocapteurs, qui consiste :
- à utiliser une fonction logique OU de type "OU global", non pas uniquement sur toute la matrice, mais sur des zones de recherche de taille et de position variables, la taille d'une zone de recherche pouvant varier de la taille d'un photocapteur individuel à la taille de toute la matrice ; et
- à poursuivre la recherche uniquement sur des zones de recherche illuminées (dont au moins un photocapteur est actif), les zones de recherche non illuminées n'étant plus prises en compte ; et
- à former des zones de recherche de taille toujours plus réduite, on converge très rapidement vers la zone illuminée de ladite matrice.

Ainsi, grâce à l'invention, on réalise une extraction rapide et fiable d'une zone illuminée, sur une matrice de photocapteurs d'un dispositif de détection lumineuse.

Dans le cadre de la présente invention, la division d'un domaine matriciel est réalisée avec un nombre qui peut être variable et quelconque de zones de recherche, de tailles identiques ou différentes.

Dans un premier mode de réalisation, à l'étape a), on divise un domaine matriciel à chaque fois en quatre zones de recherche de tailles identiques.

Dans un second mode de réalisation, à l'étape a), on forme à chaque fois par la division du domaine matriciel une zone de recherche prioritaire, qui est centrée sur une position estimée de la zone illuminée et qui est ensuite analysée en priorité à l'étape b).

Par ailleurs, dans un mode de réalisation particulier, une zone de recherche étant définie par ses positions d'extrémité sur un premier axe représentant les colonnes, ainsi que par ses positions d'extrémité sur un second axe représentant les lignes :
- dans une première partie, on répète les étapes a) à c) jusqu'à obtenir les positions d'extrémité de la zone illuminée sur ledit premier axe ; et
- dans une seconde partie, on répète les étapes a) à c) jusqu'à obtenir les positions d'extrémité de la zone illuminée sur ledit second axe.

La présente invention concerne également un dispositif de détection lumineuse, comportant une matrice de photocapteurs qui sont agencés en lignes et en colonnes et qui sont susceptibles de prendre chacun l'un de deux états, un état actif et un état inactif.

Selon l'invention, ledit dispositif de détection lumineuse est remarquable en ce qu'il comporte de plus une cellule de sélection de lignes et une cellule de sélection de colonnes, qui sont associées à ladite matrice et qui sont susceptibles d'extraire une zone illuminée de ladite matrice, en mettant en oeuvre le procédé précité.

Les figures du dessin annexé feront bien comprendre comment l'invention peut être réalisée. Sur ces figures, des références identiques désignent des éléments semblables.

La figure 1 est le schéma synoptique d'un dispositif de détection lumineuse conforme à l'invention.

La figure 2 est un graphique permettant de mettre en évidence la taille et la position d'une zone de recherche sur une matrice de photocapteurs d'un dispositif de détection lumineuse conforme à l'invention.

Les figures 3 à 5 montrent une matrice de photocapteurs respectivement à trois étapes successives, lors de la mise en oeuvre d'un procédé conforme à une première variante de l'invention.

La figure 6 montre schématique une matrice de photocapteurs permettant d'illustrer un procédé conforme à une seconde variante de l'invention.

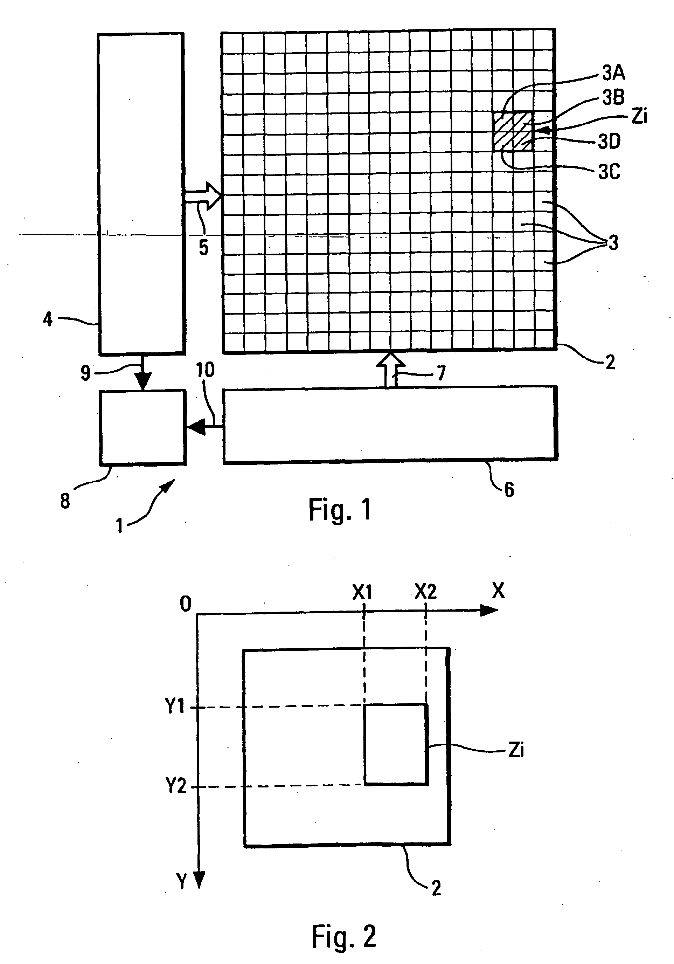

Le dispositif 1 conforme à l'invention et représenté schématiquement sur la figure 1 est destiné à détecter un signal lumineux, en particulier une impulsion laser.

Ledit dispositif 1 est du type comportant une matrice 2 de photocapteurs 3 qui sont agencés en lignes et en colonnes et qui sont susceptibles de prendre chacun l'un de deux états, un état actif lorsqu'ils sont illuminés et donc activés, et un état passif lorsqu'ils ne sont pas illuminés et donc inactivés. Cette matrice 2 est illuminée par un rayonnement lumineux sur une zone illuminée Zi correspondant à l'ensemble formé de capteurs 3A, 3B, 3C, 3D qui sont donc activés.

Selon l'invention, ledit dispositif de détection lumineuse 1 comporte de plus une cellule de sélection de lignes 4 qui est reliée par une liaison 5 de transmission de bus de ligne à la matrice 2 et une cellule de sélection de colonnes 6 qui est reliée par une liaison 7 de transmission de bus de colonne à ladite matrice 2, lesdites cellules 4 et 6 étant susceptibles d'extraire ladite zone illuminée Zi de la matrice 2, en mettant en oeuvre le procédé conforme à l'invention qui sera précisé ci-dessous.

Le dispositif 1 comporte, de plus, une unité de traitement d'informations 8 qui est reliée par des liaisons 9 et 10 respectivement auxdites cellules 4 et 6.

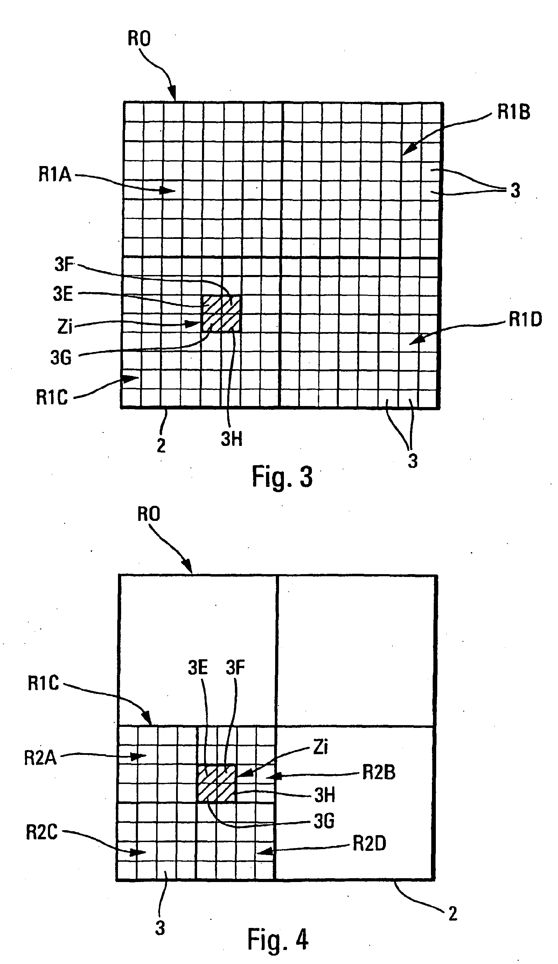

Selon le procédé conforme à l'invention qui a pour objet d'extraire la zone illuminée Zi de la matrice 2 de photocapteurs 3, on répète les étapes successives a) à c) suivantes, comme représenté par exemple sur la figure 3 :
a) on divise un domaine matriciel R0 correspondant à ladite matrice 2 en une pluralité de zones de recherche R1A, R1B, R1C, R1D qui sont telles qu'ensemble, ces zones de recherche R1A, R1B, R1C, R1D recouvrent ledit domaine matriciel R0. Dans la variante de réalisation des figures 3 à 5, chaque domaine matriciel est divisé à chaque fois en quatre zones de recherche de tailles identiques ;
b) on analyse lesdites zones de recherche R1A, R1B, R1C, R1D les unes après les autres pour rechercher la présence d'un photocapteur actif 3E, 3F, 3G, 3H. Selon l'invention, l'analyse d'une zone de recherche R1A, R1B, R1C, R1D consiste, à l'aide d'une porte logique OU du type "OU global" restreint à la zone de recherche correspondante qui est reliée à tous les photocapteurs 3 de cette zone de recherche, à recueillir les uns après les autres les états de l'ensemble de ces photocapteurs 3 de ladite zone de recherche et à vérifier globalement si l'un desdits états est un état actif. Dans l'exemple de la figure 3, grâce à une telle analyse, on déduit qu'aucun photocapteur actif ne se trouve sur les zones de recherche R1A et R1B, mais qu'au moins un photocapteur actif 3E, 3F, 3G, 3H est situé sur la zone de recherche R1C ; et
c) dès qu'un photocapteur actif 3E, 3F, 3G, 3H est trouvé sur une zone de recherche particulière, en l'occurrence la zone de recherche R1C, on arrête la recherche (par conséquent, on n'effectue aucune recherche sur la zone R1D) et on considère que cette zone de recherche R1C, dont on connaît la taille et la position sur la matrice 2, comme un nouveau domaine matriciel, pour lequel on répète les étapes a), b) et c) précédentes.

Selon l'invention, on répète lesdites étapes a) à c) jusqu'à ce que l'on obtienne un domaine matriciel comprenant uniquement des photocapteurs actifs, ce domaine matriciel correspondant alors à la zone illuminée Zi recherchée, c'est-à-dire à extraire.

Pour connaître la taille et la position sur la matrice 2 d'une zone illuminée Zi ou d'une zone de recherche, il suffit de connaître ses positions d'extrémité X1 et X2 sur un axe OX représentant les colonnes et ses positions d'extrémité Y1 et Y2 sur un axe OY représentant les lignes, comme illustré sur la figure 2 pour une zone illuminée Zi.

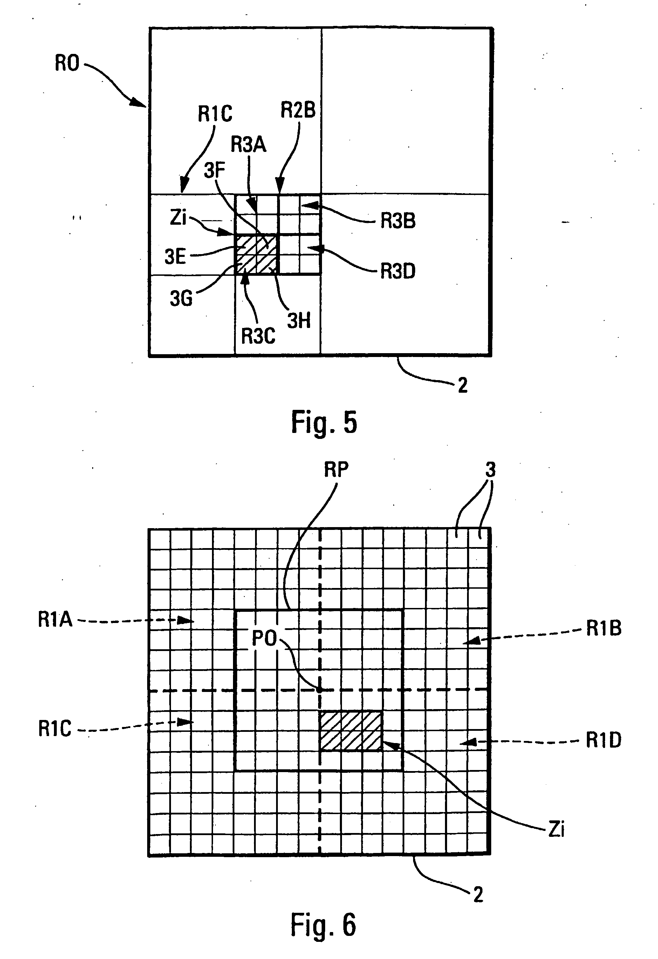

En reprenant la variante du procédé illustré sur les figures 3 à 5, à partir du nouveau domaine matriciel R1C, on remet en oeuvre lesdites étapes a) à c), c'est-à-dire :
- on divise ce domaine matriciel R1C en quatre zones de recherche R2A, R2B, R2C et R2D, comme représenté sur la figure 4 ;
- on analyse lesdites zones de recherche R2A, R2B, R2C et R2D les unes après les autres pour chercher la présence d'un photocapteur actif 3E, 3F, 3G, 3H ; et
- aucun photocapteur actif n'est trouvé sur la zone R2A, mais au moins un photocapteur actif 3E, 3F, 3G, 3H est trouvé sur la zone de recherche R2B. Cette dernière est donc considérée comme nouveau domaine matriciel, lequel est de nouveau soumis aux opérations a) à c) précitées, comme illustré sur la figure 5.

A cet effet, ce nouveau domaine matriciel R2B est divisé en quatre zones de recherche R3A, R3B, R3C et R3D. L'analyse des zones de recherche R3A et R3B est infructueuse. En revanche, l'analyse de la zone de recherche R3C indique la présence des photocapteurs actifs 3E, 3F, 3G et 3H. De plus, ce nouveau domaine matriciel R3C comporte uniquement des photocapteurs actifs 3E, 3F, 3G et 3H. Par conséquent, la zone illuminée Zi recherchée correspond à ce domaine matriciel R3C.

Ainsi, grâce à l'invention, on a extrait rapidement la zone illuminée Zi de la matrice 2 de photocapteurs 3.

Dans une autre variante de réalisation représentée sur la figure 6, on forme à chaque fois par la division du domaine matriciel (à savoir toute la matrice 2 sur la figure 6) une zone de recherche prioritaire RP qui est centrée sur une position PO estimée de la zone illuminée Zi et qui est analysée en priorité à l'étape b) suivante du procédé conforme à l'invention.

Cette variante de réalisation permet d'accélérer d'avantage encore la mise en oeuvre du procédé d'extraction d'une zone illuminée conforme à l'invention, dans le cas où une position estimée fiable de cette dernière est disponible.

Si, dans cette variante de réalisation, aucun photocapteur actif ne se trouve sur la zone de recherche prioritaire RP, on poursuit la recherche sur d'autres zones de recherche, par exemple des zones de recherche R1A, R1B, R1C et R1D.

## Revendications

1. Procédé pour extraire une zone illuminée (Zi) d'une matrice (2) de photocapteurs (3) d'un dispositif de détection lumineuse (1), ladite matrice (2) comportant une pluralité de photocapteurs (3) qui sont agencés en lignes et en colonnes et qui sont susceptibles de prendre chacun l'un de deux états, un état actif lorsqu'ils sont illuminés et donc activés et un état passif lorsqu'ils ne sont pas illuminés et donc inactivés, ladite zone illuminée (Zi) correspondant à l'ensemble des photocapteurs activés (3A, 3B, 3C, 3D, 3E, 3F, 3G, 3H),
**caractérisé en ce que** l'on répète les étapes successives a) à c) suivantes :
a) on divise un domaine matriciel (RO) de ladite matrice (2) du dispositif de détection lumineuse (1), en une pluralité de zones de recherche (R1A à R1D) couvrant ensemble ledit domaine matriciel RO), ledit domaine matriciel (RO) correspondant à toute ladite matrice (2) lors de la première division ;
b) on analyse lesdites zones de recherche (R1 A à R1 D) les unes après les autres pour rechercher la présence d'un photocapteur actif (3E à 3H), l'analyse d'une zone de recherche (R1A à R1D) consistant à l'aide d'une porte logique OU reliée à tous les photocapteurs de la zone de recherche à recueillir les uns après les autres les états de l'ensemble de ces photocapteurs de ladite zone de recherche et à vérifier globalement si l'un desdits états est un état actif ; et
c) dès qu'un photocapteur actif (3E à 3H) est trouvé sur une zone de recherche (R1C) particulière, on arrête la recherche et on considère cette zone de recherche (R1C), dont on connaît la taille et la position sur ladite matrice (2), comme nouveau domaine matriciel que l'on réutilise si nécessaire dans une nouvelle étape a),
ladite répétition des étapes a) à c) étant poursuivie jusqu'à ce que l'on obtienne un domaine matriciel (R3C) comprenant uniquement des photocapteurs actifs (3E à 3H), ce domaine matriciel (R3C) dont on connaît la taille et la position sur la matrice (2) correspondant alors à ladite zone illuminée (Zi) à extraire.

2. Procédé selon la revendication 1,
**caractérisé en ce qu'**à l'étape a), on divise un domaine matriciel (RO) à chaque fois en quatre zones de recherche (R1A à R1D) de tailles identiques.

3. Procédé selon la revendication 1,
**caractérisé en ce qu'**à l'étape a), on forme à chaque fois par la division du domaine matriciel une zone de recherche prioritaire (RP), qui est centrée sur une position estimée (PO) de la zone illuminée et qui est ensuite analysée en priorité à l'étape b).

4. Procédé selon la revendication 1,
**caractérisé, en ce que**, une zone de recherche étant définie par ses positions d'extrémité sur un premier axe (OX) représentant les colonnes, ainsi que par ses positions d'extrémité sur un second axe (OY) représentant les lignes :
- dans une première partie, on répète les étapes a) à c) jusqu'à obtenir les positions d'extrémité (X1, X2) de la zone illuminée (Zi) sur ledit premier axe (OX) ; et
- dans une seconde partie, on répète les étapes a) à c) jusqu'à obtenir les positions d'extrémité (Y1, Y2) de la zone illuminée (Zi) sur ledit second axe (OY).

5. Dispositif de détection lumineuse, comportant une matrice (2) de photocapteurs (3) qui sont agencés en lignes et en colonnes et qui sont susceptibles de prendre chacun l'un de deux états, un état actif lorsqu'ils sont illuminés et un état inactif lorsqu'ils ne sont pas illuminés,
**caractérisé en ce qu'**il comporte, de plus, une cellule (4) de sélection de lignes et une cellule (6) de sélection de colonnes, qui sont associées à ladite matrice (2) et qui sont susceptibles d'extraire une zone illuminée (Zi) de ladite matrice (2), en mettant en oeuvre le procédé spécifié sous l'une quelconque des revendications 1 à 4.

## Claims

1. A method for extracting an illuminated zone (Zi) from a matrix (2) of photosensors (3) of a light-detecting device (1), said matrix (2) comprising a plurality of photosensors (3) which are arranged in rows and in columns and which are each able to take one of two states, an active state when they are illuminated and therefore activated and a passive state when they are not illuminated and therefore inactivated, said illuminated zone (Zi) corresponding to the set of activated photosensors (3A, 3B, 3C, 3D, 3E, 3F, 3G, 3H),
**characterized in that** the following successive steps a) to c) are repeated:
a) a matrix field (RO) of said matrix (2) of the light-detecting device (1) is divided into a plurality of search zones (R1A to R1D) together covering said matrix field (RO), said matrix field (RO) corresponding to the entire said matrix (2) during the first division;
b) said search zones (R1A to R1D) are analyzed one after another in order to search for the presence of an active photosensor (3E to 3H), the analysis of a search zone (R1A to R1D) consisting in using an OR logic gate connected to all the photosensors of the search zone to collect, one after another, the states of all these photosensors of said search zone and to check overall if one of said states is an active state; and
c) as soon as an active photosensor (3E to 3H) is found in a particular search zone (R1C), the search is stopped and this search zone (R1C), the size and the position on said matrix (2) of which is known, is considered to be a new matrix field that can be reused if necessary in a new step a),
said repetition of steps a) to c) being continued until obtaining a matrix field (R3C) comprising only active photosensors (3E to 3H), this matrix field (R3C), the size and the position on the matrix (2) of which are known, then corresponding to said illuminated zone (Zi) to be extracted.

2. The method as claimed in claim 1,
**characterized in that**, in step a), a matrix field (RO) is divided each time into four search zones (R1A to R1D) of identical sizes.

3. The method as claimed in claim 1,
**characterized in that**, in step a), a priority search zone (RP) is formed each time by dividing up the matrix field, which zone is centered on an estimated position (PO) of the illuminated zone and which is then analyzed as a priority in step b).

4. The method as claimed in claim 1,
**characterized in that**, a search zone being defined by its end positions on a first axis (OX) representing the columns, and by its end positions on a second axis (OY) representing the rows:
- firstly, the steps a) to c) are repeated until obtaining the end positions (X1, X2) of the illuminated zone (Zi) on said first axis (OX); and
- secondly, the steps a) to c) are repeated until obtaining the end positions (Y1, Y2) of the illuminated zone (Zi) on said second axis (OY).

5. A light-detecting device, comprising a matrix (2) of photosensors (3) which are arranged in rows and in columns and which are each able to take one of two states, an active state when they are illuminated and an inactive state when they are not illuminated,
**characterized in that** it further comprises a row selection cell (4) and a column selection cell (6) which are associated with said matrix (2) and which are able to extract an illuminated zone (Zi) from said matrix (2) by implementing the method specified in any one of claims 1 to 4.

## Patentansprüche

1. Verfahren zum Extrahieren eines beleuchteten Bereichs (Zi) einer Matrix (2) von Photosensoren (3) einer Lichterkennungsvorrichtung (1), wobei die Matrix (2) eine Vielzahl von Photosensoren (3) umfasst, die in Zeilen und Spalten angeordnet sind und die geeignet sind, jeweils einen von zwei Zuständen einzunehmen, nämlich einen aktiven Zustand, wenn sie beleuchtet und somit aktiviert sind, und einen passiven Zustand, wenn sie nicht beleuchtet und somit inaktiviert sind, wobei der beleuchtete Bereich (Zi) der Gesamtheit der aktivierten Photosensoren (3A, 3B, 3C, 3D, 3E, 3F, 3G, 3H) entspricht,
**dadurch gekennzeichnet, dass** die folgenden aufeinanderfolgenden Schritte a) bis c) wiederholt werden:
a) ein Matrixbereich (RO) der Matrix (2) der Lichterkennungsvorrichtung (1) wird in eine Vielzahl von Suchbereichen (R1A bis R1D) unterteilt, die zusammen den Matrixbereich (RO) bedecken, wobei der Matrixbereich (RO) bei der ersten Teilung der gesamten Matrix (2) entspricht;
b) die Suchbereiche (R1A bis R1D) werden einer nach dem anderen analysiert, um nach der Gegenwart eines aktiven Photosensors (3E bis 3H) zu suchen, wobei die Analyse eines Suchbereichs (R1A bis R1D) darin besteht, mit Hilfe eines logischen Verknüpfungsglieds ODER, das mit allen Photosensoren des Suchbereichs verknüpft ist, nacheinander die Zustände der Gesamtheit dieser Photosensoren des Suchbereichs zu erfassen und global zu überprüfen, ob einer der Zustände ein aktiver Zustand ist; und
c) sobald ein aktiver Photosensor (3E bis 3H) in einem speziellen Suchbereich (R1C) gefunden wird, wird die Suche gestoppt und dieser Suchbereich (R1C), dessen Größe und Position auf der Matrix (2) bekannt sind, als neuer Matrixbereich betrachtet, der, wenn dies notwendig ist, in einem neuen Schritt a) wiederverwendet wird,
wobei die Wiederholung der Schritte a) bis c) so lange fortgesetzt wird, bis ein Matrixbereich (R3C) erzielt wird, der einzig aktive Photosensoren (3E bis 3H) enthält, wobei dieser Matrixbereich (R3C), dessen Größe und Position auf der Matrix (2) bekannt sind, nun dem zu extrahierenden beleuchteten Bereich (Zi) entspricht.

2. Verfahren nach Anspruch 1,
**dadurch gekennzeichnet, dass** im Schritt a) ein Matrixbereich (RO) jedes Mal in vier Suchbereiche (R1A bis R1D) von identischer Größe unterteilt wird.

3. Verfahren nach Anspruch 1,
**dadurch gekennzeichnet, dass** im Schritt a) jedes Mal durch die Teilung des Matrixbereichs ein vorrangiger Suchbereich. (RP) gebildet wird, der auf eine geschätzte Position (PO) des beleuchteten Bereichs zentriert ist und der anschließend im Schritt b) vorrangig analysiert wird.

4. Verfahren nach Anspruch 1,
**dadurch gekennzeichnet, dass**, wobei ein Suchbereich durch seine Endpositionen auf einer ersten Achse (OX), die die Spalten darstellt, sowie durch seine Endpositionen auf einer zweiten Achse (OY), die die Zeilen darstellt, definiert wird,
- in einem ersten Teil die Schritte a) bis c) wiederholt werden, bis die Endpositionen (X1, X2) des beleuchteten Bereichs (Zi) auf der ersten Achse (OX) festgestellt werden; und
- in einem zweiten Teil die Schritte a) bis c) wiederholt werden, bis die Endpositionen (Y1, Y2) des beleuchteten Bereichs (Zi) auf der zweiten Achse (OY) festgestellt werden.

5. Lichterkennungsvorrichtung, umfassend eine Matrix (2) aus Photosensoren (3), die in Zeilen und Spalten angeordnet sind und die geeignet sind, jeweils einen von zwei Zuständen einzunehmen, nämlich einen aktiven Zustand, wenn sie beleuchtet sind, und einen inaktiven Zustand, wenn sie nicht beleuchtet sind,
**dadurch gekennzeichnet, dass** sie darüber hinaus eine Zelle (4) zur Auswahl von Zeilen und eine Zelle (6) zur Auswahl von Spalten umfasst, die mit der Matrix (2) verbunden sind und die geeignet sind, einen beleuchteten Bereich (Zi) der Matrix (2) zu extrahieren, indem das Verfahren angewendet wird, das unter einem der Ansprüche 1 bis 4 spezifiziert ist.
